# EUROPÄISCHE PATENTANMELDUNG

(11) **EP 1 475 571 A1**
(43) Veröffentlichungstag der Anmeldung: **10.11.2004**
(21) Anmeldenummer: 03027015.1
(22) Anmeldetag: 22.11.2003
(51) Int. Cl.: F24D 10/00, F24D 17/00, F24D 3/08, F24D 11/00

(54) **Verfahren und Einrichtung zur lastabhängigen Steuerung des Volumenstromes in einem Heizkreis einer nach dem Durchlaufprinzip arbeitenden Einrichtung zur Warmwasseraufbereitung**

(30) Priorität: 08.05.2003 DE 10320835
(71) Anmelder: Vertrieb und Grosshandel von Heizungs-, Sanitär- und Elektroerzeugnissen, 13055 Berlin (DE)
(72) Erfinder: Schramm, Bruno, Dipl.-Ing., 15537 Grünheide (DE); Lang, Jürgen, Dipl.-Ing., 12557 Berlin (DE)
(74) Vertreter: Burghardt, Dieter, Dipl.-Ing.

(57) **Zusammenfassung**

Die Erfindungsaufgabe, ein Verfahren und eine Einrichtung zur lastabhängigen Steuerung des Volumenstromes in einem Heizkreis-Vorlauf eines Wärmeübertragers in einem der Trinkwassererwärmung dienenden und nach dem Durchlaufprinzip arbeitenden Trinkwarmwasserbereiter in einer durch externe oder interne Wärmeerzeuger gespeisten Hausanschlußstation zu entwickeln, wurde dadurch gelöst, daß bei konstanter Wärmeenergiebereitstellung die einem Wärmetauscher zur Warmwasserbereitstellung zugeführten Volumina im Durchsatz lastabhängig zweistufig gesteuert werden und im Starklastfall zusätzlich aus einem Energiespeicher eine den angestiegenen Energiebedarf abdeckende Menge eines Zusatzheizmediums dem über die Hausanschlußstation oder über einen Heizkessel entnommenen Heizmedium zugespeist wird.

## Beschreibung

Die Erfindung betrifft ein Verfahren und eine Einrichtung zur lastabhängigen Steuerung der Vorlaufvolumina im Heizkreis einer Einrichtungen zur Erwärmung von Trinkwasser in einer nach dem Durchflußprizip arbeitenden Warmwasserbereitungsanlage in einer durch Fern- und Nahwärme oder Heizkessel gespeisten Hausanschlußstation.

Mit Hilfe von Hausanschlußstationen werden sowohl Ein- und Mehrfamilienhäuser, Hotels, Bürogebäude, Produktionsstätten, therapeutische Einrichtungen, Sportstätten als auch andere kommunale Einrichtungen mit Wärme für Heizung und Warmwasser versorgt.

Die nachfolgende Anlagenbeschreibung bezieht sich auf Hausanschlußstationen mit Fernwärmeanschluß. Alle erfindungsgemäße Effekte sind auf nahwärmesysteme und Heizungskesselanlagen sinngemäß übertragbar.

Eine Hausanschlußstation für Fernwärme muß so ausgelegt sein, daß der Energiebedarf für Heizung und Warmwasser mit den vom Verbraucher gewünschten Temperaturen zu jeder Zeit abgedeckt werden kann.

Von den Fernwärmelieferanten wird die Temperatur des Fernwärmevorlaufes an die Witterung gleitend angepaßt, um die Verbraucher sowohl bei kalter Witterung ausreichend mit Wärme und Warmwasser als auch in der warmen Jahreszeit mit Warmwasser zu versorgen, aber dabei nicht unnötig Fernwärme bereitstellen zu müssen. Hierdurch soll die Fernwärmeversorgung wirtschaftlich gestaltet werden.

Die Temperatur des Fernwärmevorlaufes kann auf 140°C in der kalten Jahreszeit ansteigen. In der wärmeren Jahreszeit erreicht sie 80°C und könnte weit darunter liegen, wenn nicht für die Warmwasserbereitung Wärme im Vorlauf mit einer Temperatur von mindestens 65°C bereitgestellt werden müßte.

Auch der tägliche Bedarf an Fernwärme weist starke Schwankungen auf, vor allem durch den Spitzenbedarf in den Morgenstunden, wenn die Gebäude nach der nächtlichen Phase des abgesenkten Heizbetriebs wieder aufgeheizt werden und gleichzeitig ein erhöhter Warmwasserverbrauch vorwiegend für die Körperpflege benötigt wird.

Obwohl der erhöhte Wärmebedarf für die Warmwasserbereitung nur kurzzeitig auftritt, erhöhte sich die erforderliche Fernwärmeleistung erheblich, wenn der Bedarf für Heizung und Warmwasserbereitung gleichzeitig auftritt. Für diese höhere Fernwärmeleistung sind im Fernwärmenetz größere Rohrleitungsquerschnitte zu verlegen und stärkere Pumpen zu installieren.

Zur Senkung der Bereitstellungskosten für Fernwärme in der Ferwärmeversorgung als auch der Anlagenkosten muß der Gleichzeitigkeitsfaktor für den Wärmeverbrauch verändert werden. Um die Verbraucher zur Änderung ihres Verhaltens, d.h. des Gleichzeitigkeitsfaktors bei der Wärmentnahme zu zwingen und daran zu interessieren, ihren maximalen Fernwärmeverbrauch zu drosseln, bzw. die Wärmeentnahme einem gleichmäßigeren Durchschnittsverbrauch anzupassen, erheben die Fernwärmelieferanten neben den Kosten für den Fernwärmeverbrauch als fixe Kosten einen Zuschlag in Abhängigkeit von der Anschlußleistung der Hausanschlußstation, die sogenannten Anschlußwertkosten.

Um die Anschlußleistung für Hausanschlußstationen reduzieren zu können, wurden die Hausanschlußstationen mit Trinkwasserspeichern versehen, aus denen ein Teil oder der gesamte Warmwasserbedarf während der Spitzenbedarfszeiten abgedeckt wird. Die Speicherladung erfolgt diskontinuierlich und auch während der Spitzenlastzeiten. Somit ist nur eine nicht definierte Senkung des Anschlußwertes gegeben. Begrenzt wird die Energiespeicherung im erwärmten Trinkwasser durch die obere Grenztemperatur desselben von 60° C und durch das maximale Speichervolumen. Diese Lösung bleibt nur eine theoretische, da die Speicherung von erwärmtem Trinkwasser die Gefahr beinaltet, daß sich die im Trinkwasser enthaltenen Legionellen vermehren, was vor allem dann eintritt, wenn über eine längere Zeitspanne kein oder sehr wenig Wasser entnommen wird und sich dann eine undefinierte Temperaturschichtung im Energiespeicher ausbildet. Bekanntlich vermehren sich die im Trinkwasser vorhandenen Legionellen zwischen 35° und 45° C besonders im stehenden Wasser sprunghaft. Legionellen befallenes Trinkwasser kann zu ernsthaften Gesundheitsschäden führen. Außerdem gilt seit 01.01.2003 eine neue Trinkwasserverordnung mit höheren Auflagen bezüglich Infektionsschutz (Legionellenbefall) als bisher. Diese zwingt Betreiber von Wasserversorgungsanlagen zu einer größeren Sorgfalt.

Bei Hausanschlußstationen für Fernwärme zur Heizung und Warmwasserbereitung können prinzipiell Anteile vom Fernwärmevorlauf, vom Fernwärmerücklauf, vom Heizungsrücklauf oder vom Warmwasser gespeichert werden, um in einer Spitzenbedarfszeit neben der Anschlußleistung eine Reserve zur Abdeckung eines kurzzeitigen Spitzenbedarfs zur Verfügung zu haben. Bei Warmwasserspeichern werden Speicher-Lade-Systeme und Durchflußsysteme unterschieden.

Es sind Warmwasserbereitungsanlagen nach dem Durchflußprinzip bekannt. Grundlegendes Prinzip dieser bekannten Anlagen ist, daß ein Wärmeübertrager auf einer Seite vom Trinkwasser je nach Bedarf durchströmt und auf der anderen Seite von einem Heizmedium (Heizwasser oder Fernwärme) durchflossen wird. Die Menge und Temperatur des Heizmediums wird durch Regeleinrichtungen im Vorlauf des Wärmetauschers dem jeweiligen Bedarf angepaßt, so daß das Warmwasser auch bei wechselnden Durchsätzen stets die gleiche Temperatur besitzt. Der Mangel dieser Temperatursteuerung des aufgewärmten Trinkwassers besteht darin, daß große Schwankungen zwischen Schwachlastfall und Höchstlastfall ausgeglichen werden müssen, was zu einem hohen regelungstechnischen Aufwand führt.

Zur Warmwassererzeugung in Fernwärme gespeisten Hausanschlußstationen ist die Verwendung einer zweistufigen Warmwasserbereitung nach dem Durchflußprinzip mit einem nachgeschalteten Trinkwasserspeicher in der DD 204 987 be-schrieben. Die Warmwasserbereitungsanlage besteht aus einem Vorwärmer und einem Nachwärmer. Das aus dem Heizkreis-Rücklauf abströmende Medium strömt durch einen als Vorwärmer ausgebildeten Wärmeübertrager, bevor es als Fernwärme-Rücklauf die Station verläßt. Dieser Wärmeübertrager wird auf der anderen Seite vom kaltem Trinkwasser durchströmt. Je nach Heizungs-rücklauftemperatur und Warmwasseranfall wird dieses kalte Trinkwasser ungeregelt vorgewärmt. Danach durchströmt das vorerwärmte Trinkwasser den Nachwärmer, wo es auf Soll-Temperatur erwärmt wird. Dieser Nachwärmer wird über normale Regelkreise mittels Fernwärme beaufschlagt. Diese zweistufige Trinkwassererwärmung hat zwar den Vorteil, daß hierzu weniger Fernwärme-Vorlaufmedium benötigt wird, was die Anschlußleistung der Station senkt, aber nicht zur Minderung von benötigter Heiz-leistung in Spitzenbelastungszeiten beiträgt, da die diese zweistufige Warmwasserbereitung für extreme Leistungsverhältnisse ausgelegt ist. Im Sommerfall bei Fernwärme-Vorlauftemperaturen von 80° C sind das Stellventil der Regeleinrichtung und der Nachwärmer relativ groß auszulegen, da außerdem auch der unterstützende Heizungsrücklauf über den Vorwärmer fehlt. Im Winterfall hingegen bei einer Fernwärme-Vorlauftemperatur von 140° C und einer maximalen Vorerwärmung des Trinkwassers über den Vorwärmer wäre das Stellventil der Regeleinrichtung sehr klein zu dimensionieren. Beide Lastfälle sind noch überlagert von den unterschiedlichen Lastverhältnissen auf der Trinkwasserseite, wobei vorwiegend nur eine Grundlast auftritt. Diese aufgeführten Unzulänglichkeiten weisen sich als Mängel der vorgeschlagenen bekannten Lösung aus.

In der Praxis zeigt sich daher, daß das das Stellventil der Regeleinrichtung über die meiste Zeit in der unteren Stellung arbeitet, wobei das Regelverhalten sehr ungünstig ist. Außerdem wird bei hohen Fernwärme-Vorlauftemperaturen und deshalb geringen Volumenströmen der Nachwärmer nicht gleichmäßig durchströmt. Dieser Mangel wird zwar etwas abgeschwächt dadurch, daß ein Trinkwasserspeicher zur Pufferung eingesetzt wird, wodurch das Stellventil der Regeleinrichtung ein besseres Regelverhalten zeigt.

Der Trinkwasserspeicher, der nach dieser Lehre zur Spitzenlastpufferung eingesetzt wird, stellt sich außerdem aus hygienischer Sicht als eine Gefahr dar, da der Speicherinhalt sich nicht vollständig entleeren und damit austauschen läßt, was eine Legionellengefahr begründet.

Ziel der Erfindung ist es, den Anschlußwert für eine durch Fernwärme gespeiste Hausanschlußstation zu senken, der u.a. durch einen diskontinuierlichen Wärmeenergieverbrauch für die Bereitstellung von erwärmtem Trinkwasser ungünstig beeinflußt wird, und gleichzeitig eine Versorgung mit Warmwasser auch bei unterschiedlichen Lastverhältnissen zu sichern.

Der Erfindung liegt die Aufgabe zugrunde, ein Verfahren und eine Einrichtung zur lastabhängigen Steuerung des Volumenstromes in einem Heizkreis-Vorlauf einer nach dem Durchlaufprinzip arbeitenden Einrichtung zur Trinkwassererwärmung dienenden Wärmeübertrager in einer durch externe oder interne Wärmeerzeuger gespeisten Hausanschlußstation zu entwickeln.

Diese Aufgabe wird erfindungsgemäß durch die in den unabhängigen Ansprüchen offenbarte technische Lehre gelöst.

Die Erfindung wird nachfolgend an einem Ausführungsbeispiel näher erläutert. Die zugehörigen Zeichnungen zeigen:

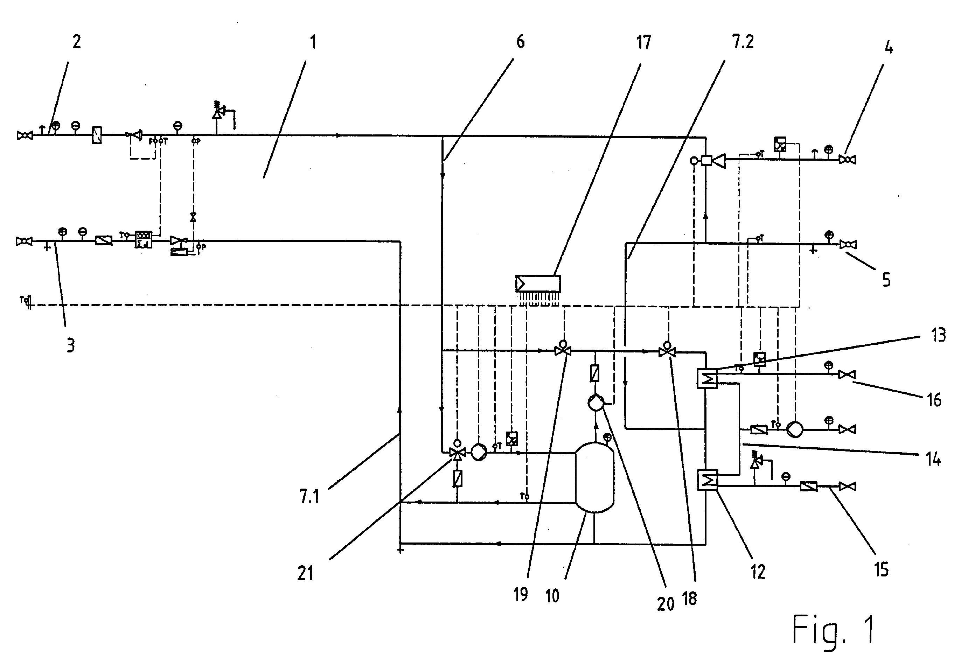

- Fig. 1: eine Schaltungsanordnung mit zwei Wärmeübertragern in einer Einrichtung zur Trinkwassererwärmung mit einer erfindungsgemäß ausgebildeten Regelung des Fernwärme-Vorlauf-Primärkreises,
- Fig. 2: eine vom Fernwärmeversorgungsnetz entkoppelte Hausanschlußstation mit einer Schaltungsanordnung von zwei Wärmeübertragern in einer Einrichtung zur Trinkwassererwärmung mit einer erfindungsgemäß ausgebildeten Regelung des Vorlauf-Primärkreises,
- Fig. 3: eine Hausanschlußstation nach Fig. 2 mit einer erfindungsgemäß ausgebildeten Regelung des Vorlauf-Primärkreises mit zwei Wärmeübertragern und eines erfindungsgemäß gestalteten Wärmespeichers,

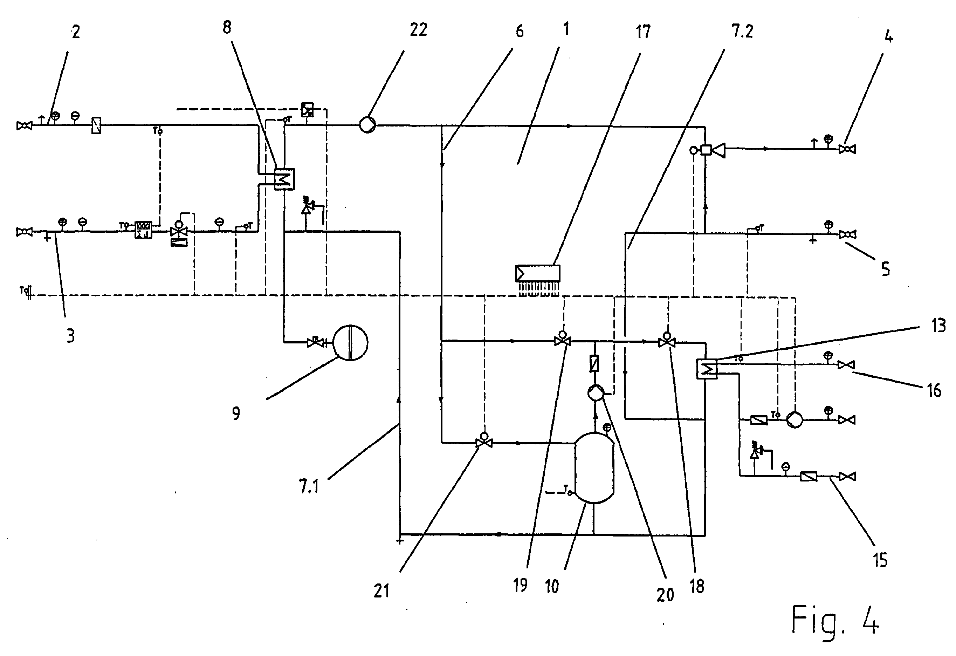

- Fig. 4: eine Hausanschlußstation nach Fig. 3 mit einem Wärmeübertrager.

Eine direkt mit einem Fernwärmenetz verbundene Hausanschlußstation 1 ist mit einem Fernwärmevorlauf 2 und einem Fernwärmerücklauf 3 verbunden und weist für die Heizung einen mit dem Fernwärmevorlauf 2 verbundenen Heizungsvorlauf 4 und einen mit dem Fernwärmerücklauf 3 verbundenen Heizungsrücklauf 5 sowie für eine Trinkwasser aufbereitende Warmwasserbereitungsanlage einen mit dem Fernwärmevorlauf 2 verbundenen Vorlaufanschluß 6 für die Warmwasserbereitung und einen mit dem Fernwärmerücklauf 3 über einen Anlagen-Rücklauf 7.1 verbundenen Heizungs-Rücklauf 7.2 auf.

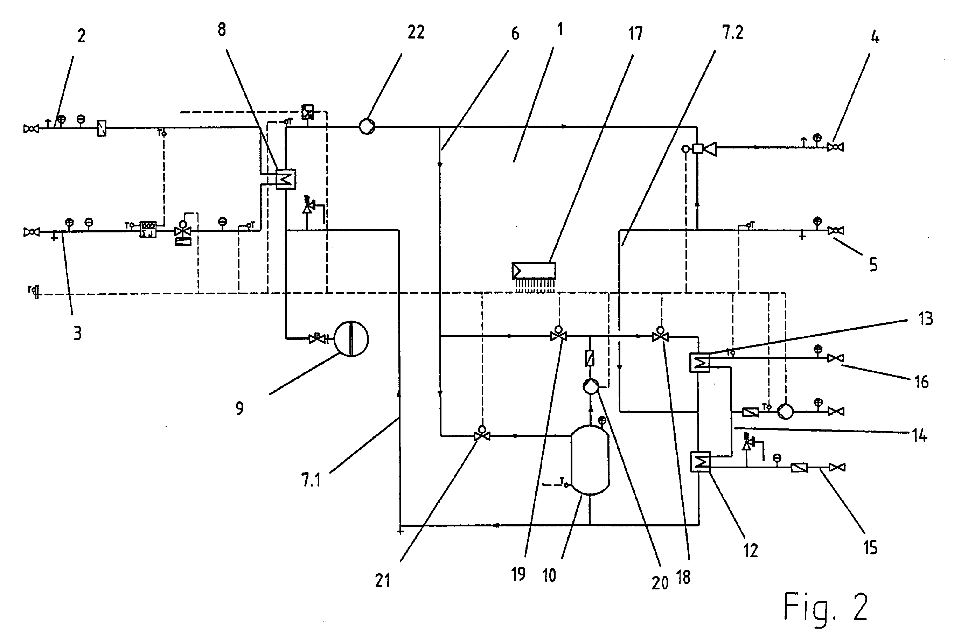

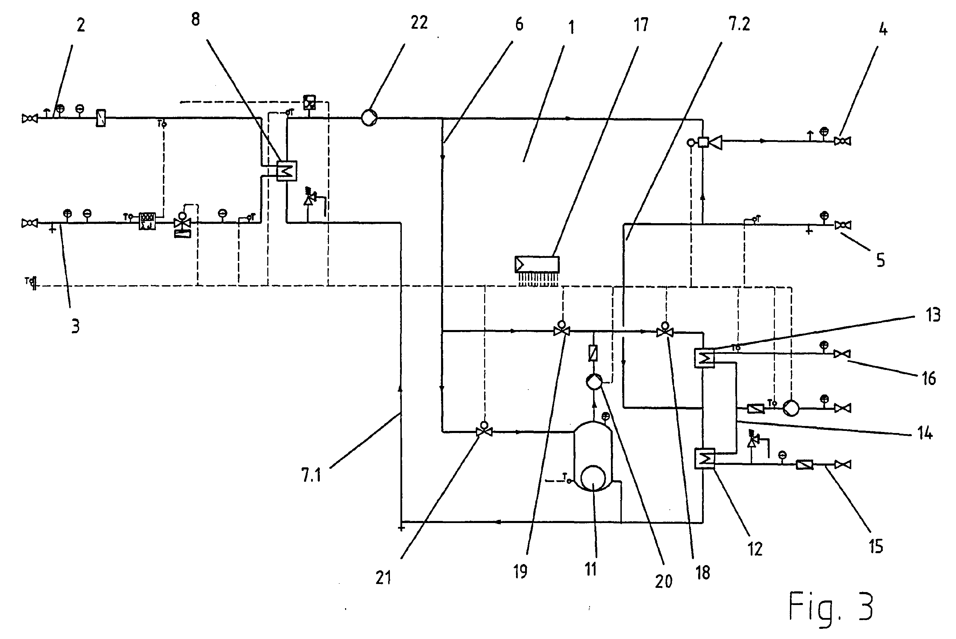

Eine Hausanschlußstation 1 ist nach Fig. 2 primärseitig über einen Entkopplungs-Wärmetauscher 8 indirekt mit dem Fernwärmevorlauf 2 und dem Fernwärmerücklauf 3 verbunden. Der Heizungsvorlauf 4, der Heizungsrücklauf 5, der Vorlaufanschluß 6 und der über einen Anlagen-Rücklauf 7.1 verbundene Heizungs-Rücklauf 7.2 sind sekundärseitig mit dem Entkopplungs-Wärmetauscher 8 verbunden. Die vom Fernheizungsnetz entkoppelte Hausanschlußstation 1 weist ein Ausgleichsgefäß 9 auf, das nach einem weiteren Merkmal der Erfindung mit einem heizkreisseitig gespeisten Energiespeicher 10 der Warmwasserbereitungsanlage zu einer Baueinheit als Anlagenausgleichs-Energiespeicher 11 nach Fig. 3 zusammengeführt ausgebildet ist.

Die Warmwasserbereitungsanlage der Hausanschlußstation 1 besteht aus einem die Vorerwärmung des Trinkwassers bewirkenden, als Vorwärmer 12 ausgebildeten Wärmeübertrager und einem als Nachwärmer 13 ausgebildeten Wärmeübertrager. Der Nachwärmer 13 ist mit dem Vorlaufanschluß 6 verbunden und anschließend wird der Vorwärmer 12 vom Heizmedium durchströmt. Der Vorwärmer 12 ist mit dem Fernwärmerücklauf 3 bzw. sekundärseitig mit dem Entkopplungs-Wärmetauscher 8 über eine Verbindungsleitung 7.1 verbunden. Das im Vorwärmer 12 vorgewärmte, nicht dargestellte Trinkwasser wird über eine Trinkwasserzwischenleitung 14 aus einem Kaltwasseranschluß 15 dem Nachwärmer 13 zugeführt und hier auf Solltemperatur für eine Warmwasserzuführung 16 gebracht. Die Temperatur des im Nachwärmer 13 erwärmten Trinkwassers wird mittels einer elektronischen Regelung 17 überwacht und auf Solltemperatur begrenzt. Hierzu werden zwei im Vorlauf zum Nachwärmer 13 angeordnete Stellventile als Hauptventil 18 und Nebenventil 19 durch diese elektronische Regelung 17 gesteuert.

Im Hauptbebetriebszustand, dem Schwachlastfall, ist das Hauptventil 18 vollständig geöffnet und eine Förderpumpe 20, die in einer zwischen Energiespeicher 10 und einer nach dem Nebenventil 19 in den Vorlaufanschluß 6 einmündenden Einspeiseleitung 20 vorgesehenen ist, außer Betrieb. Der Energiespeicher 10 wird während des Schwachlastfalles über den Vorlaufanschluß 6 mit Heizenergie konstant beaufschlagt und bis zur Solltemperatur aufgeheizt. Zur Aufheizbegrenzung des Inhaltes des Energiespeicher 10 bis zur Solltemperatur ist ein von der elektronische Regelung 17 gesteuertes Stellventil 21 vorgesehen. Während dieses Schwachlastfalles übernimmt das gesteuerte Nebenventil 19, das für einen geringeren Durchsatz als das Hauptventil 18 ausgelegt ist, die gesamte Leistungsregelung des Nachwärmers 13. Das Nebenventil 19 weist eine bessere Regelungscharakeristik bezogen auf den Schwachlastfall auf und ermöglicht ein an den Leistungsbedarf des Nachwärmers 13 angepasstes Regelverhalten zu verwirklichen.

Im Starklastfall, d.h. in den Früh- und Abendsspitzen übernimmt das Hauptventil 18 die Leistungssteuerung des Nachwärmers 13. Hierbei wird das Nebenventil 19 in die Stellung "Offen" geführt und gleichzeitig geht die Pumpe 20 in Betrieb. Damit wird Energie aus dem Energiespeicher 10 in den Primärkreis zum Nachwärmer 13 eingespeist. Das für einen größeren Durchsatz gegenüber dem Nebenventil 19 ausgebildete Hauptventil 18 übernimmt die Leistungsregelung.

Reicht die momentane Leistung des Nachwärmers 13 im Schwachlastfall nicht aus, dient der Vorwärmer 12 durch Bereitstellung von ungeregeltem vorerwärmtem Trinkwassers aus dem Kaltwasseranschluß 15 für eine wirtschaftliche Gestaltung der Warmwasserbereitung.

Die vom Fernheizversorgungsnetz durch Zwischenschaltung des Entkopplungs-Wärmetauschers 8 entkoppelte Hausanschlußstation 1 weist eine Vorlauf-Förderpumpe 22 auf. Diese bewirkt die gleichmäßige Beaufschlagung des Heizkreises wie auch die Einrichtung zur Warmwasserbereitung.

Die Anordnung eines Nebenventils 19 und eines Hauptventil 18 bewirkt eine wirtschaftlich bessere Anlagenführung und ermöglicht durch Zuschaltung des Energiespeicher 10 den Anschlußwert bei der Fernwärmebereitstellung zu senken. Letztlich ist die funktionelle Kombination von Ausdehnungsgefäß und Energiespeicher in einem Anlagengefäß als Anlagenausgleichsund Energiespeicher 11 die Voraussetzung für die Senkung von Investitionskosten, Reduzierung des Platzbedarfes für eine Hausanschlußstation und zur Senkung von Wärmeverlusten. Die Ausdehnungsgefäße sind nämlich bisher nicht mit einer Wärmeisolation versehen.

Mit der erfindungsgemäß ausgestalteten Hausanschlußstation wird erreicht, daß der Anschlußwert am Fernheiznetz gesenkt werden kann und eine Hausanschlußstation sowohl mit einer höheren Effektivität als auch mit einer höheren Sicherheit betrieben werden kann. Die Tennung des Fernheizversorgungsnetzes vom Versorgungskreislauf innerhalb der Hausanschlußstation bringt diese höhere Sicherheit.

### Bezugszeichen-Aufstellung

- 1: Hausanschlußstation
- 2: Fernwärmevorlauf
- 3: Fermwärmerücklauf
- 4: Heizungsvorlauf
- 5: Heizungsrücklauf
- 6: Vorlaufanschluß
- 7.1: Anlagen-Rücklauf
- 7.2: Heizungsrücklauf
- 8: Entkopplungs-Wärmetauscher
- 9: Ausgleichsgefäß
- 10: Energiespeicher
- 11: Ausgleichs-Energiespeicher
- 12: Vorwärmer
- 13: Nachwärmer
- 14: Trinkwasserzwischenleitung
- 15: Kaltwasseranschluß
- 16: Warmwasserzuführung
- 17: elektronische Regelung
- 18: Hauptventil
- 19: Nebenventil
- 20: Pumpe
- 21: Stellventil
- 22: Vorlaufförderpumpe

## Patentansprüche

1. Verfahren zur lastabhängigen Steuerung des Volumenstromes in einem Heizkreis einer nach dem Durchlaufprinzip arbeitenden Einrichtung zur Warmwasserbereitstellung einer Hausanschlußstation oder Heizungsanlage, **dadurch gekennzeichnet, daß** bei konstanter Wärmeenergiebereitstellung die einem Wärmetauscher zur Warmwasserbereitstellung zugeführten Volumina im Durchsatz lastabhängig zweistufig gesteuert werden und im Starklastfall zusätzlich aus einem Energiespeicher (10 bzw. 11) eine den angestiegenen Energiebedarf abdeckende Menge eines Zusatzheizmediums dem über die Hausanschlußstation oder über einen Heizkessel entnommenen Heizmedium zugespeist wird.

2. Verfahren nach Anspruch 1, **dadurch gekennzeichnet, daß** im Schwachlastfall die Regelung der Heizlast im Warmwasserbereiter über das geöffnete Nebenventil (19) bei stillgelegter Pumpe (20) vor dem Energiespeicher (10) und geöffneten Hauptventil (18) vorgenommen wird.

3. Verfahren nach Anspruch 1, **dadurch gekennzeichnet, daß** im Starklastfall die Regelung der Heizlast für Warmwasserbereiter bei geöffneten Nebenventil (19) durch das Hauptventil (18) bei gleichzeitiger Einspeisung einer Speicherenergiemenge aus dem Energiespeicher (10 bzw.11) vorgenommen wird.

4. Hausanschlußstation, die aus einem Fernwärmenetz gespeist wird, mit einem direkten Fernwärmeanschluß des Heizmediums eines Heizkreislaufes für die Raumbeheizung und einer nach dem Durchlaufprinzip arbeitenden mehrstufigen Einrichtung zur Warmwasserbereitstellung zur Durchführung des Verfahrens nach Anspruch 1, **dadurch gekennzeichnet, daß** zur Warmwasserbereitstellung eine mehrstufige lastabhängige, das Durchsatzvolumen im mit einem Vorlaufanschluß (6) verbundenen Vorlauf zu einem als Nachwärmer (13) ausgebildeten Wärmetauscher regelnde, aus Hauptventil (18) und Nebenventil (19) bestehende, Einrichtung und ein Energiespeicher (10) vorgesehen sind.

5. Hausanschlußstation, die aus einem Fernwärmenetz oder aus einer Heizkesselanlage gespeist wird, mit einer indirekten Wärmeübertragung der Wärmeenergie über einen Wärmeaustauscher auf das Heizmedium eines Heizkreislaufes für die Raumbeheizung und zur nach dem Durchlaufprinzip arbeitenden Einrichtung zur Warmwasserbereitstellung zur Durchführung des Verfahrens nach Anspruch 1, **dadurch gekennzeichnet, daß** zur Warmwasserbereitstellung eine mehrstufige lastabhängige, das Durchsatzvolumen im mit einem Vorlaufanschluß (6) verbundenen Vorlauf zu einem als Nachwärmer (13) ausgebildeten Wärmetauscher regelnde, aus Hauptventil (18) und Nebenventil (19) bestehende, Einrichtung vorgesehen ist.

6. Hausanschlußstation nach Anspruch 3, **dadurch gekennzeichnet, daß** ein Ausgleichsgefäß (9) und der Energiespeicher (10) zu einer Baueinheit zusammengefaßt und als ein Energiespeicher-Ausgleichgefäß (11) ausgebildet ist.
